# EUROPEAN PATENT APPLICATION

(11) **EP 4 800 949 A1**
(43) Date of publication of application: **02.09.2026**
(21) Application number: 26158988.1
(22) Date of filing: 17.02.2026
(51) Int. Cl.: H04L 1/00, H04L 5/00, H04W 72/0453, H04W 84/12

(54) **EXCHANGING SUBBAND PUNCTURE INFORMATION FOR NETWORK THROUGHPUT MANAGEMENT**

(30) Priority: 27.02.2025 US 202519066120
(71) Applicant: Avago Technologies International Sales Pte. Limited, Singapore 768923 (SG)
(72) Inventor: LALE, Bharath Ramesh, 560100 Bangalore, Karnataka (IN); TADAHAL, Shivkumar Basavaraj, 560100 Bangalore, Karnataka (IN); RAVEENDRANATH KAMATH, Manoj, 560100 Bangalore, Karnataka (IN); BANDARU, Yogesh, 560100 Bangalore, Karnataka (IN); GUPTA, Raghvendra, 560100 Bangalore, Karnataka (IN)
(74) Representative: Dilg, Haeusler, Schindelmann Patentanwaltsgesellschaft mbH

(57) **Abstract**

Methods, systems, and devices for exchanging subband puncture information for network throughput management are described. In some examples, an access point may receive an action frame from a station device, which includes a disabled subchannel bitmap subfield that indicates subband puncturing information based on localized interference detected by the station device. The access point may then determine a negotiated subband puncturing pattern that considers both the station device's and the access point's detected subband puncturing information. Subsequently, the access point may transmit an action frame back to the station device containing this negotiated subband puncturing pattern. Both the access point and the station device may adhere to this negotiated subband puncturing pattern for future unicast frame exchanges, thereby enhancing network efficiency by effectively managing packet transmissions and reducing packet collisions.

## Description

### FIELD OF TECHNOLGOY

The present disclosure relates generally to systems and methods for communication between a station (STA) and access point (AP) (e.g., in a wireless local area network) or between other communication devices.

### BACKGROUND

In the field of wireless communications, networks are composed of Access Points and Station devices that communicate within defined areas known as Basic Service Sets. These devices may operate on overlapping frequency bands, which may lead to co-channel interference affecting the network's performance. To facilitate efficient data exchange and reduce interference, these networks may employ mechanisms that allow for the control of packet transmissions in specific subbands. Access Points may communicate subband puncturing information to associated Station devices based on observed interference, which may involve restricting packet transmissions in certain subbands to mitigate collision risks. This process may involve the use of beacon frames containing information about the subbands to be punctured, allowing for a more managed approach to handling interference within the network.

### SUMMARY

The described techniques relate to improved methods, systems, devices, and apparatuses that support techniques for exchanging subband puncture information for network throughput management. In some examples, Station devices may actively participate in the management of subband puncturing by communicating puncturing information based on their localized interference observations to the Access Point. Through the use of proprietary Action frames containing a Disabled Subchannel Bitmap subfield, Station devices may convey their puncturing preferences to the Access Point based on the Overlapping Basic Service Set interference they detect. This additional information from the Station devices allows the Access Point to consider the Station-specific interference when determining the subband puncturing pattern, leading to a more tailored and effective interference mitigation strategy.

Upon receiving the puncturing information from a Station, the Access Point may respond with a proprietary Action frame that indicates the negotiated subband puncturing to be followed by both the Access Point and the Station. This negotiation process ensures that the puncturing pattern is optimized for each Station's unique interference environment, thereby enhancing the overall network efficiency. Furthermore, the Access Point may have the capability to send unsolicited proprietary Action frames to Stations, allowing it to proactively manage the different puncturing patterns across the Basic Service Set. By adopting this mechanism, some implementations may overcome the limitations of the existing standards, providing a dynamic and responsive approach to interference management that is sensitive to the localized conditions experienced by individual Stations.

A method for exchanging subband puncture information for network throughput management is described. The method may include receiving, at an access point (AP), an action frame from a station device (STA), the action frame including a disabled subchannel bitmap subfield indicating subband puncturing information based on localized interference detected by the STA. The method may include determining, at the AP, a negotiated subband puncturing pattern based on the subband puncturing information received from the STA and subband puncturing information based on interference detected by the AP. The method may include transmitting, from the AP to the STA, an action frame containing the negotiated subband puncturing pattern. The method may include adhering to the negotiated subband puncturing pattern for subsequent unicast frame exchanges between the AP and the STA.

A system configured for exchanging subband puncture information for network throughput management is described. The system may include a processor and memory coupled with the processor. The system may include instructions stored in the memory and executable by the processor to cause the system to receive at an access point an action frame from a station device, the action frame including a disabled subchannel bitmap subfield indicating subband puncturing information based on localized interference detected by the station device. The system may include instructions to determine at the access point a negotiated subband puncturing pattern based on the subband puncturing information received from the station device and subband puncturing information detected by the access point. The system may include instructions to transmit from the access point to the station device an action frame containing the negotiated subband puncturing pattern. The system may include instructions to adhere to the negotiated subband puncturing pattern for subsequent unicast frame exchanges between the access point and the station device.

Another system for exchanging subband puncture information for network throughput management is described. The system may include means for receiving, at an access point (AP), an action frame from a station device (STA), the action frame including a disabled subchannel bitmap subfield indicating subband puncturing information based on localized interference detected by the STA. The system may include means for determining, at the AP, a negotiated subband puncturing pattern based on the subband puncturing information received from the STA and subband puncturing information detected by the AP. The system may include means for transmitting, from the AP to the STA, an action frame containing the negotiated subband puncturing pattern. The system may include means for adhering to the negotiated subband puncturing pattern for subsequent unicast frame exchanges between the AP and the STA.

A non-transitory computer-readable medium storing code for wireless communication at a UE is described. The code may include instructions executable by a processor to receive, at an AP, an action frame from a STA device, the action frame including a disabled subchannel bitmap subfield indicating subband puncturing information based on localized interference detected by the STA device. The code may include instructions executable by a processor to determine, at the AP, a negotiated subband puncturing pattern based on the subband puncturing information received from the STA device and subband puncturing information detected by the AP. The code may include instructions executable by a processor to transmit, from the AP to the STA device, an action frame containing the negotiated subband puncturing pattern. The code may include instructions executable by a processor to adhere to the negotiated subband puncturing pattern for subsequent unicast frame exchanges between the AP and the STA device.

Some examples of the method, systems, and non-transitory computer-readable medium described herein may further include operations, features, means, or instructions for transmitting, from the access point to the station device, a capability bit indicating support for the subband puncturing exchange mechanism within a vendor specific element in at least one of a beacon frame, a probe response frame, or a (re)association response frame.

Some examples of the method, systems, and non-transitory computer-readable medium described herein may further include operations, features, means, or instructions for receiving, at the access point, a probe request or a (re)association request frame from the station device. The frame may include a vendor specific element with a capability bit indicating the station device's support for the subband puncturing exchange mechanism.

In some examples of the method, systems, and non-transitory computer-readable medium described herein, the station device may adhere to an additional subband puncturing pattern indicated by the access point in beacon frames, in combination with the negotiated subband puncturing pattern, for subsequent unicast frame exchanges.

Some examples of the method, systems, and non-transitory computer-readable medium described herein may further include operations, features, means, or instructions for sending, from the access point, an unsolicited action frame to the station device. The unsolicited action frame may contain a subband puncturing pattern for the station device to adhere to in addition to the negotiated subband puncturing pattern.

In some examples of the method, systems, and non-transitory computer-readable medium described herein, a bandwidth for unicast frame exchanges of the station device may be downgraded in response to the negotiated subband puncturing pattern not honoring the station device's subband puncturing request.

In some examples of the method, systems, and non-transitory computer-readable medium described herein, the action frame from the station device may include a timestamp. This timestamp may enable the access point to determine the temporal relevance of the subband puncturing information.

In some examples of the method, systems, and non-transitory computer-readable medium described herein, the negotiated subband puncturing pattern may be stored in a memory of the access point. This storage may facilitate quick retrieval for subsequent communication sessions with the station device.

In some examples of the method, systems, and non-transitory computer-readable medium described herein, the action frame transmitted from the access point may include a timestamp. This timestamp may allow the station device to verify when the negotiated subband puncturing pattern was negotiated.

In some examples of the method, systems, and non-transitory computer-readable medium described herein, the action frame from the station device may be encrypted. This encryption may ensure the confidentiality of the subband puncturing information during transmission.

In some examples of the method, systems, and non-transitory computer-readable medium described herein, the access point may prioritize the action frame from the station device over other data traffic. This prioritization may expedite the negotiation of the subband puncturing pattern.

In some examples of the method, systems, and non-transitory computer-readable medium described herein, the access point may update the negotiated subband puncturing pattern in response to changes in the localized interference detected by the station device.

### BRIEF DESCRIPTION OF THE DRAWINGS

FIG. 1 illustrates an example of a wireless communications system that supports exchanging subband puncture information for network throughput management in accordance with aspects of the present disclosure.
FIG. 2 shows overlapping BSS interference which supports techniques for exchanging subband puncture information for network throughput management in accordance with various aspects of the present disclosure.
FIG. 3 shows a communication pattern diagram which supports techniques for exchanging subband puncture information for network throughput management in accordance with various aspects of the present disclosure.
FIG. 4 illustrates an example of a process flow that supports exchanging subband puncture information for network throughput management in accordance with various aspects of the present disclosure.
FIG. 5 shows a block diagram of an apparatus that supports exchanging subband puncture information for network throughput management in accordance with various aspects of the present disclosure.
FIG. 6 shows a block diagram of a subband negotiation component that supports exchanging subband puncture information for network throughput management in accordance with various aspects of the present disclosure.
FIG. 7 shows a diagram of a system including a device that supports exchanging subband puncture information for network throughput management in accordance with various aspects of the present disclosure.
FIGS. 8 and 9 show flowcharts illustrating methods that support exchanging subband puncture information for network throughput management in accordance with various aspects of the present disclosure.

### DETAILED DESCRIPTION

The following standards, including any draft versions of such standards, are hereby incorporated by reference in their entirety and are made a part of the present disclosure for all purposes: Wireless Fidelity (Wi-Fi^{®}) Alliance^{®} standards and Institute of Electrical and Electronics Engineers (IEEE^{®}) 802.11 standards, including, but not limited to, 802.11^{™}, 802.11a^{™}, 802.11b^{™}, 802.11g^{™}, 802.11n^{™}, 802.11ac^{™}, 802.11ax^{™}, 802.11be^{™}, 802.11ad^{™}, 802.11ay^{™}, 802.11af^{™}, 802.11ah^{™}, 802.11ai^{™}, 802.11aj^{™}, 802.11ak^{™}, 802.11aq^{™}, 802.11ba^{™}, 802.11c^{™}, 802.11d^{™}, 802.11e^{™}, 802.11f^{™}, 802.11h^{™}, 802.11i^{™}, and 802.11j^{™}. Although the present disclosure may reference aspects of these standard(s), the disclosure is in no way limited by these standard(s).

Methods, systems, devices, and apparatuses that support techniques for exchanging subband puncture information for network throughput management are disclosed. In some examples, the current subband puncturing mechanisms, as defined in wireless communication standards, are limited by their centralized approach, where only the network controller communicates puncturing information based on its observation of co-channel interference from overlapping networks. This approach neglects the fact that client devices may experience different levels and locations of interference within their operating environment, which are not visible to the network controller. Consequently, the network controller's puncturing instructions may not effectively mitigate packet collisions for all client devices, leading to suboptimal network performance. The lack of a mechanism for client devices to communicate their localized interference to the network controller further exacerbates the issue, as the network controller cannot adjust its puncturing strategy to accommodate the specific needs of each client device. This results in a one-size-fits-all solution that fails to address the diverse interference landscapes within a network.

According to some implementations, some implementations may include a system where Station devices and Access Points exchange information to manage interference in wireless networks. Station devices may send messages with specific information about interference in certain frequency bands to Access Points. These messages, known as proprietary Action frames, may contain a Disabled Subchannel Bitmap subfield that identifies the affected frequency bands. An Action frame is a specific type of management frame in Wi-Fi (802.11) communications that carries request and response information for various wireless LAN services. Action frames were introduced to extend the management frame functionality.

Access Points may receive these messages and negotiate with the Station devices to agree on a pattern of frequency bands that should be avoided to reduce interference. This negotiation may result in Access Points sending back their own messages, also containing a Disabled Subchannel Bitmap subfield, which indicates the agreed-upon pattern. Both Station devices and Access Points may then follow this pattern when communicating with each other.

The system may allow Station devices and Access Points to indicate their ability to participate in this exchange of information. They may do this by including a specific bit, called the Station Bandwidth Puncturing Support bit, within a Vendor Specific Element in various types of messages, such as Beacon, Probe Response, Association Response, Probe Request, and Reassociation Request frames.

The structure of the Vendor Specific Element that indicates this capability may include several parts: a Tag, a Tag Number, a Tag Length, an Organizationally Unique Identifier, a Vendor Specific Organizationally Unique Identifier Type, and Vendor Specific Data. Within the Vendor Specific Data, a specific bit may indicate support for the Station Bandwidth Puncturing mechanism.

Access Points may send messages to Station devices that have shown support for Station Bandwidth Puncturing. These messages, which may be sent without a prior request from the Station devices, may suggest patterns of frequency bands to avoid to manage interference.

If an Access Point does not agree with the pattern suggested by a Station device, the Station device may choose to reduce its operating bandwidth to avoid using the affected frequency bands. This may be done using an Operating Mode Indication mechanism.

The patterns of frequency bands that are being avoided may be detected using network sniffing tools. These tools may monitor and analyze the patterns in use.

Some implementations may include a system where a Station device recommends patterns of frequency bands to avoid, based on its own observations of interference, to an Access Point. The Access Point may then adopt these suggestions for future communications with that particular Station device. Access Points may have information about the patterns of frequency bands to avoid for all Station devices in the network, which may correspond to the overall view of interference in the network.

Aspects of the subject matter described in this disclosure can be implemented to realize one or more of the following potential advantages. The described techniques may be implemented to support enhanced network efficiency by allowing individual devices within a wireless network to communicate their unique interference experiences, which may lead to a more dynamic and responsive interference management system. The system may enable a more personalized approach to interference mitigation, where each device may have its own tailored pattern of frequency bands to avoid, potentially leading to a reduction in packet collisions and improved data throughput. The negotiation process between devices may be flexible, allowing for adjustments to be made over time as the interference landscape changes. The capability indication mechanism may facilitate the identification of devices that are equipped to participate in the exchange of interference information, ensuring compatibility and streamlining the negotiation process. The described system may be beneficial in environments with dense device deployments, where interference from multiple sources may be prevalent and ever-changing.

Aspects of the disclosure are initially described in the context of networked computing systems. Aspects of the disclosure are additionally illustrated by and described with reference to example implementations. Aspects of the disclosure are further illustrated by and described with reference to apparatus diagrams, system diagrams, and flowcharts that relate to exchanging subband puncture information for network throughput management.

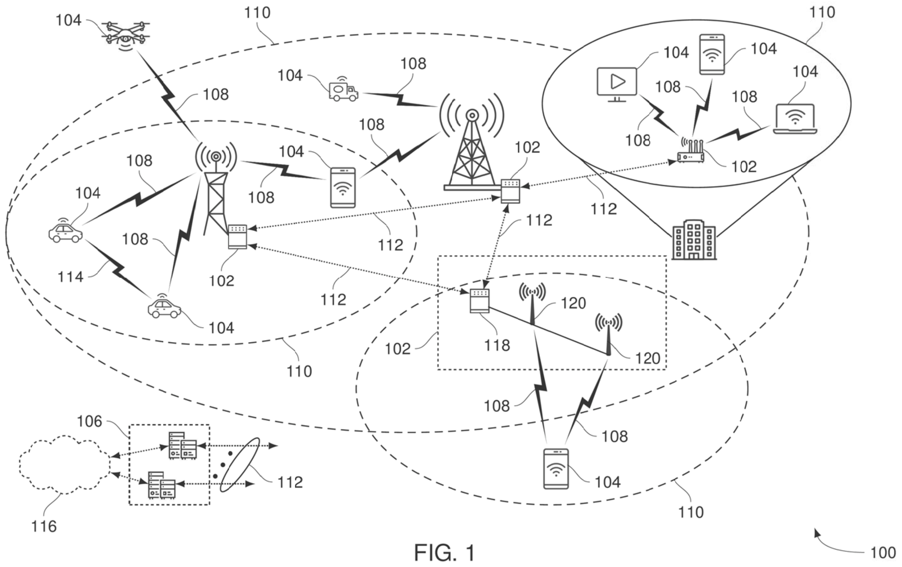

FIG. 1 illustrates an example of a wireless communications system 100 that supports techniques for exchanging subband puncture information for network throughput management in accordance with various aspects of the present disclosure. In some implementations, the wireless communication system 100 may include devices and/or components that facilitate data transmission and/or connectivity via a network (e.g., a wired and/or a wireless network). For example, the wireless communications system 100 may include one or more base stations 102, which may also be referred to herein as an access point (AP) or a wireless AP, one or more UEs 104, which may also be referred to herein as a station (STA), and a core network 106.

Communication among the base stations 102 and the UEs 104 may be enabled via a wired and/or a wireless network connection. In some implementations, the network may include any type and/or form of network. As an example, the network may include a point-to-point network, a broadcast network, a telecommunications network, a data communication network, and/or a computer network, among other examples. The network may include any suitable network topology, such as a bus, a star, and/or a ring network topology, among other examples. Accordingly, for example, the network may be any suitable network topology capable of supporting the systems and methods described herein. In some implementations, the network may include a wireless wide area network (WAN) (e.g., a cellular network or a public land mobile network), a local area network (LAN) (e.g., a wired LAN or a wireless local area network (WLAN), such as a Wi-Fi^{®} network), a wireless personal area network (WPAN) (e.g., a Bluetooth^{®} network), a near-field communication network, a Zigbee^{®} network, a long range wide area network (LoRaWAN^{®}), an ultra-wideband (UWB) network, a worldwide interoperability for microwave access (WiMAX^{®}) network, a satellite network, a telephone network, a private network, the Internet, or a combination of these and other network types. Additionally, in some implementations, different types of data may be transmitted using different protocols, and the same type of data may also be transmitted using multiple protocols.

In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

In some implementations, the base station 102 (e.g., Access Point) may include an antenna, or antenna array, to communicate with the wireless communication device (e.g., within a coverage area of the base station). In some implementations, the base station 102 may include one or more devices, such as Wi-Fi^{®} APs that facilitate WLANs and/or cellular base stations (e.g., fifth generation (5G) base stations) that provide network connectivity for cellular communication systems. The base station 102 may enable wireless connectivity for the wireless communication device by managing data transmission and ensuring proper communication within a respective network environment. In some implementations, the base station 102 may enable the wireless communication device to connect to a wired network using standards, such as Wi-Fi^{®} standards and/or 802.11 standards. The base station 102 may be implemented (e.g., configured, designed and/or built) for operating in a WLAN. In some implementations, the base station 102 may connect to a router (e.g., via a wired network) as a standalone device. In some implementations, the base station 102 may be a component of a router. The base station 102 may provide multiple devices (e.g., multiple wireless communication devices) access to a network. The base station 102 may connect to a wired ethernet connection and provide wireless connections using radio frequency (RF) links for other devices (e.g., other wireless communication devices) to utilize that wired connection. The base station 102 may be implemented to support a standard (e.g., a standard defined by the IEEE). The base station 102 may be configured and/or used to support public Internet hotspots, and/or on a network to extend a Wi-Fi^{®} signal range of the network. In some implementations, the network device may be used for wireless networks in various environments (e.g., in-home, in-vehicle, and/or in-building environments) utilizing protocols, such as IEEE 802.11, Bluetooth, ZigBee, and/or any other RF-based protocol, including variations thereof.

In some implementations, the base stations 102 may be dispersed throughout a geographic area to form the wireless communications system 100 and may be devices in different forms or having different capabilities. The base stations 102 and the UEs 104 may wirelessly communicate via one or more communication links 108. Each base station 102 may provide a geographic coverage area 110 over which the UEs 104 and the base station 102 may establish one or more communication links 108. The geographic coverage area 110 may be an example of a geographic area over which a base station 102 and a UE 104 may support the communication of signals according to one or more radio access technologies.

The UEs 104 may be dispersed throughout a geographic coverage area 110 of the wireless communications system 100, and each UE 104 may be stationary, or mobile, or both at different times. The UEs 104 may be devices in different forms or having different capabilities. Some example UEs 104 are illustrated in FIG. 1. The UEs 104 described herein may be able to communicate with various types of devices, such as other UEs 104, the base stations 102, or network equipment (e.g., core network nodes, relay devices, integrated access and backhaul (IAB) nodes, or other network equipment), as shown in FIG. 1.

The base stations 102 may communicate with the core network 106, or with one another, or both. For example, the base stations 102 may interface with the core network 106 through one or more backhaul links 112 (e.g., via an S1, N2, N3, or other interface). The base stations 102 may communicate with one another over the backhaul links 112 (e.g., via an X2, Xn, or other interface) either directly (e.g., directly between base stations 102), or indirectly (e.g., via core network 106), or both. In some examples, the backhaul links 112 may be or include one or more wireless links.

One or more of the base stations 102 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 104 may include or may be referred to as a mobile device, a wireless device, a remote device, a handheld device, or a subscriber device, or some other suitable terminology, where the "device" may also be referred to as a unit, a station, a terminal, or a client, among other examples. A UE 104 may also include or may be referred to as a personal electronic device such as a cellular phone, a personal digital assistant (PDA), a tablet computer, a laptop computer, or a personal computer. In some examples, a UE 104 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 104 described herein may be able to communicate with various types of devices, such as other UEs 104 that may sometimes act as relays as well as the base stations 102 and the network equipment including macro eNBs or gNBs, small cell eNBs or gNBs, or relay base stations, among other examples, as shown in FIG. 1.

The base stations 102 and the UEs 104 may operate in accordance with various aspects of the disclosure as described herein, which may enhance performance, reduce costs and/or size, and/or improve broadband applications, among other examples. The UEs 104 and the base stations 102 may wirelessly communicate with one another via one or more communication links 108 over one or more carriers. The term "carrier" may refer to a set of radio frequency spectrum resources having a defined physical layer structure for supporting the communication links 108. For example, a carrier used for a communication link 108 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 104 using carrier aggregation or multi-carrier operation. A UE 104 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 104. A carrier may be operated in a standalone mode where initial acquisition and connection may be conducted by the UEs 104 via the carrier, or the carrier may be operated in a non-standalone mode where a connection is anchored using a different carrier (e.g., of the same or a different radio access technology).

The communication links 108 shown in the wireless communications system 100 may include uplink transmissions from a UE 104 to a base station 102, or downlink transmissions from a base station 102 to a UE 104. Carriers may carry downlink or uplink communications (e.g., in an FDD mode) or may be configured to carry downlink and uplink communications (e.g., in a TDD mode).

A carrier may be associated with a bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a radio access technology (e.g., 1.4, 3, 5, 10, 15, 20, 40, or 80 megahertz (MHz)). Devices of the wireless communications system 100 (e.g., the base stations 102, the UEs 104, or both) may have hardware configurations that support communications over a carrier bandwidth or may be configurable to support communications over one of a set of carrier bandwidths. In some examples, the wireless communications system 100 may include base stations 102 or UEs 104 that support simultaneous communications via carriers associated with multiple carrier bandwidths. In some examples, each served UE 104 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may include one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 104 receives and the higher the order of the modulation scheme, the higher the data rate may be for the UE 104. A wireless communications resource may refer to a combination of a radio frequency spectrum resource, a time resource, and a spatial resource (e.g., spatial layers or beams), and the use of multiple spatial layers may further increase the data rate or data integrity for communications with a UE 104.

One or more numerologies for a carrier may be supported, where a numerology may include a subcarrier spacing (Δf) and a cyclic prefix. A carrier may be divided into one or more BWPs having the same or different numerologies. In some examples, a UE 104 may be configured with multiple BWPs. In some examples, a single BWP for a carrier may be active at a given time and communications for the UE 104 may be restricted to one or more active BWPs.

The time intervals for the base stations 102 or the UEs 104 may be expressed in multiples of a basic time unit which may, for example, refer to a sampling period of T*ₛ*=1/(Δf_{*ma*x}·N*_{f}*) seconds, where Δf*ₘₐₓ* may represent the maximum supported subcarrier spacing, and N*_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., N*_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 104. For example, one or more of the UEs 104 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 104 and UE-specific search space sets for sending control information to a specific UE 104.

Each base station 102 may provide communication coverage via one or more cells, for example a macro cell, a small cell, a hot spot, or other types of cells, or any combination thereof. The term "cell" may refer to a logical communication entity used for communication with a base station 102 (e.g., over a carrier) and may be associated with an identifier (ID) for distinguishing neighboring cells (e.g., a physical cell ID (PCID), a virtual cell ID (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 102. For example, a cell may be or include a building, a subset of a building, or exterior spaces between or overlapping with geographic coverage areas 110, among other examples.

A macro cell covers a relatively large geographic area (e.g., several kilometers in radius) and may allow unrestricted access by the UEs 104 with service subscriptions with the network provider supporting the macro cell. A small cell may be associated with a lower-powered base station 102, as compared with a macro cell, and a small cell may operate in the same or different (e.g., licensed, unlicensed) frequency bands as macro cells. Small cells may provide unrestricted access to the UEs 104 with service subscriptions with the network provider or may provide restricted access to the UEs 104 having an association with the small cell (e.g., the UEs 104 in a closed subscriber group (CSG), the UEs 104 associated with users in a home or office). A base station 102 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 102 may be movable and therefore provide communication coverage for a moving geographic coverage area 110. In some examples, different geographic coverage areas 110 associated with different technologies may overlap, but the different geographic coverage areas 110 may be supported by the same base station 102. In other examples, the overlapping geographic coverage areas 110 associated with different technologies may be supported by different base stations 102. The wireless communications system 100 may include, for example, a heterogeneous network in which different types of the base stations 102 provide coverage for various geographic coverage areas 110 using the same or different radio access technologies.

The wireless communications system 100 may support synchronous or asynchronous operation. For synchronous operation, the base stations 102 may have similar frame timings, and transmissions from different base stations 102 may be approximately aligned in time. For asynchronous operation, the base stations 102 may have different frame timings, and transmissions from different base stations 102 may, in some examples, not be aligned in time. The techniques described herein may be used for either synchronous or asynchronous operations.

Some UEs 104, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 102 without human intervention. In some examples, M2M communication or MTC may include communications from devices that integrate sensors or meters to measure or capture information and relay such information to a central server or application program that makes use of the information or presents the information to humans interacting with the application program. Some UEs 104 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 104 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 104 include entering a power saving deep sleep mode when not engaging in active communications, operating over a limited bandwidth (e.g., according to narrowband communications), or a combination of these techniques. For example, some UEs 104 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 104 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 104 may also be able to communicate directly with other UEs 104 over a device-to-device (D2D) communication link 114 (e.g., using a peer-to-peer (P2P) or D2D protocol). One or more UEs 104 utilizing D2D communications may be within the geographic coverage area 110 of a base station 102. Other UEs 104 in such a group may be outside the geographic coverage area 110 of a base station 102 or be otherwise unable to receive transmissions from a base station 102. In some examples, groups of the UEs 104 communicating via D2D communications may utilize a one-to-many (1:M) system in which each UE 104 transmits to every other UE 104 in the group. In some examples, a base station 102 facilitates the scheduling of resources for D2D communications. In other cases, D2D communications are carried out between the UEs 104 without the involvement of a base station 102.

In some systems, the D2D communication link 114 may be an example of a communication channel, such as a sidelink communication channel, between vehicles (e.g., UEs 104). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 102) using vehicle-to-network (V2N) communications, or with both.

The core network 106 may include a network hardware component. The network hardware component may include one or more devices, such as routers, gateways, switches, and/or other networking components, that provide wired or wireless connectivity and enable communication within an LAN connection and/or between devices (e.g., network devices and/or wireless communication devices) in a network environment. The network hardware components may route data, manage network traffic, and/or ensure communication integrity between devices (e.g., network devices and/or wireless communication device) within a wireless network system.

The core network 106 may provide user authentication, access authorization, tracking, Internet Protocol (IP) connectivity, and other access, routing, or mobility functions. The core network 106 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 104 served by the base stations 102 associated with the core network 106. User IP packets may be transferred through the user plane entity, which may provide IP address allocation as well as other functions. The user plane entity may be connected to IP services 116 for one or more network operators. The IP services 116 may include access to the Internet, Intranet(s), an IP Multimedia Subsystem (IMS), or a Packet-Switched Streaming Service.

Some of the network devices, such as a base station 102, may include subcomponents such as an access network entity 118, which may be an example of an access node controller (ANC). Each access network entity 118 may communicate with the UEs 104 through one or more other access network transmission entities 120, which may be referred to as radio heads, smart radio heads, or transmission/reception points (TRPs). Each access network transmission entity 120 may include one or more antenna panels. In some configurations, various functions of each access network entity 118 or base station 102 may be distributed across various network devices (e.g., radio heads and ANCs) or consolidated into a single network device (e.g., a base station 102).

The wireless communications system 100 may operate using one or more frequency bands, sometimes in the range of 300 megahertz (MHz) to 300 gigahertz (GHz). The region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 104 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 104 and the base stations 102, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE unlicensed radio access technology, or NR technology in an unlicensed band such as the 5 GHz industrial, scientific, and medical (ISM) band. When operating in unlicensed radio frequency spectrum bands, devices such as the base stations 102 and the UEs 104 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 102 or a UE 104 may be equipped with multiple antennas, which may be used to employ techniques such as transmit diversity, receive diversity, multiple-input multiple-output (MIMO) communications, or beamforming. The antennas of a base station 102 or a UE 104 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 102 may be located in diverse geographic locations. A base station 102 may have an antenna array with a number of rows and columns of antenna ports that the base station 102 may use to support beamforming of communications with a UE 104. Likewise, a UE 104 may have one or more antenna arrays that may support various MIMO or beamforming operations. Additionally or alternatively, an antenna panel may support radio frequency beamforming for a signal transmitted via an antenna port.

The base stations 102 or the UEs 104 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 102, a UE 104) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with an orientation (e.g., with respect to the antenna array of the transmitting device or receiving device, or with respect to some other orientation).

A base station 102 or a UE 104 may use beam sweeping techniques as part of beam forming operations. For example, a base station 102 may use multiple antennas or antenna arrays (e.g., antenna panels) to conduct beamforming operations for directional communications with a UE 104. Some signals (e.g., synchronization signals, reference signals, beam selection signals, or other control signals) may be transmitted by a base station 102 multiple times in different directions. For example, the base station 102 may transmit a signal according to different beamforming weight sets associated with different directions of transmission. Transmissions in different beam directions may be used to identify (e.g., by a transmitting device, such as a base station 102, or by a receiving device, such as a UE 104) a beam direction for later transmission or reception by the base station 102.

Some signals, such as data signals associated with a receiving device, may be transmitted by a base station 102 in a single beam direction (e.g., a direction associated with the receiving device, such as a UE 104). In some examples, the beam direction associated with transmissions along a single beam direction may be determined based on a signal that was transmitted in one or more beam directions. For example, a UE 104 may receive one or more of the signals transmitted by the base station 102 in different directions and may report to the base station 102 an indication of the signal that the UE 104 received with a highest signal quality or an otherwise acceptable signal quality.

In some examples, transmissions by a device (e.g., by a base station 102 or a UE 104) may be performed using multiple beam directions, and the device may use a combination of digital precoding or radio frequency beamforming to generate a combined beam for transmission (e.g., from a base station 102 to a UE 104). The UE 104 may report feedback that indicates precoding weights for one or more beam directions, and the feedback may correspond to a configured number of beams across a system bandwidth or one or more sub-bands. The base station 102 may transmit a reference signal (e.g., a cell-specific reference signal (CRS), a channel state information reference signal (CSI-RS)), which may be precoded or unprecoded. The UE 104 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 102, a UE 104 may employ similar techniques for transmitting signals multiple times in different directions (e.g., for identifying a beam direction for subsequent transmission or reception by the UE 104) or for transmitting a signal in a single direction (e.g., for transmitting data to a receiving device).

A receiving device (e.g., a UE 104) may try multiple receive configurations (e.g., directional listening) when receiving various signals from the base station 102, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 104 and a base station 102 or a core network 106 supporting radio bearers for user plane data. At the physical layer, transport channels may be mapped to physical channels.

The UEs 104 and the base stations 102 may support retransmissions of data to increase the likelihood that data is received successfully. Hybrid automatic repeat request (HARQ) feedback is one technique for increasing the likelihood that data is received correctly over a communication link 108. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

As described herein, some implementations may allow the UEs 104 to exchange subband puncturing information with the base stations 102 using proprietary Action frames containing a Disabled Subchannel Bitmap subfield. In some implementations, subband puncturing information includes data that indicates which specific frequency subbands within a communication channel are intentionally disabled or "punctured" during transmission. This exchange may enable both the UEs 104 and the base stations 102 to negotiate and adhere to a puncturing pattern that accounts for localized interference detected by the UEs 104. Upon receiving an action frame from a UE 104, the base station 102 may determine a negotiated subband puncturing pattern including the subband puncturing information received from the UE 104 and the subband puncturing information detected by the base station 102. In some implementations, the subband puncturing pattern includes a specific configuration or arrangement that defines which frequency subbands within a communication channel are disabled ("punctured") and which remain active. This pattern serves as a structured representation of the subband puncturing information. The base station 102 may then transmit an action frame containing the negotiated subband puncturing pattern back to the UE 104. Subsequent unicast frame exchanges between the base station 102 and the UE 104 may adhere to this negotiated subband puncturing pattern, thereby enhancing interference mitigation on a per-device basis within the wireless communications system 100.

It should be appreciated by a person skilled in the art that one or more aspects of the disclosure may be implemented in a system 100 to additionally or alternatively solve other problems than those described above. Furthermore, aspects of the disclosure may provide technical improvements to "conventional" systems or processes as described herein. However, the description and appended drawings only include example technical improvements resulting from implementing aspects of the disclosure, and accordingly do not represent all of the technical improvements provided within the scope of the claims.

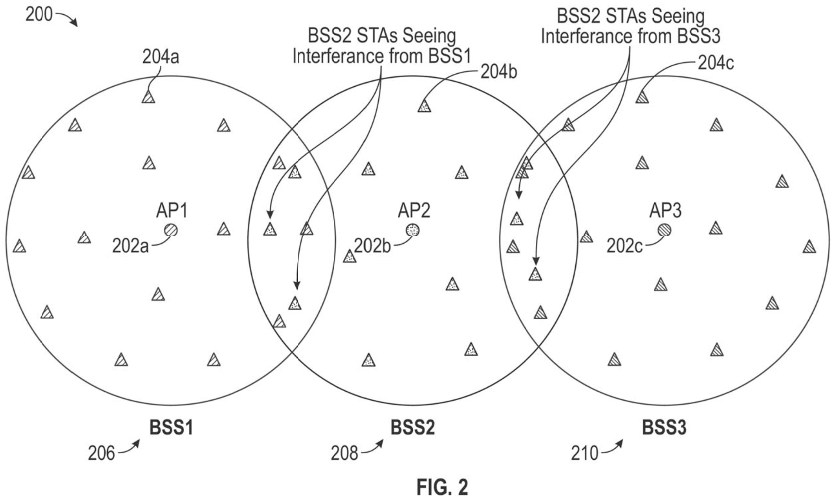

FIG. 2 shows overlapping BSS interference 200 which supports techniques for exchanging subband puncture information for network throughput management in accordance with various aspects of the present disclosure. As depicted in FIG. 2, the overlapping BSS interference 200 may include one or more of an AP 202 (AP 202a, AP 202b, and AP 202c), STAs 204 where AP 202a is associated with STAs 204a, AP 202b is associated with STAs 204b, and AP 202c is associated with STAs 204c, a BSS1 206, a BSS2 208, a BSS3 210, and/or other components.

The AP 202 may represent a device that facilitates communication within a wireless network. The AP 202 may serve as a central hub for data exchange among connected devices. The AP 202 may manage network resources and coordinate the transmission of data packets. In some implementations, the AP 202 may communicate puncturing information to STAs 204 to manage subband usage. The AP 202 may exchange proprietary action frames with STAs 204 to negotiate subband puncturing patterns.

The STAs 204 may include devices that communicate with the AP 202 to access network services. The STAs 204 may consist of various wireless-enabled devices such as smartphones, laptops, tablets, smart home devices, IoT sensors, gaming consoles, etc. The STAs 204 may receive puncturing information from the AP 202 and adhere to the subband restrictions. In some implementations, the STAs 204 may send proprietary action frames to the AP 202 indicating their own subband puncturing information.

The BSS 1 206 may indicate a basic service set operating as part of the wireless network. The BSS1 206 may function within a specific frequency range and may be subject to interference from other overlapping BSS networks. The BSS1 206 may operate independently of BSS2 208 and BSS3 210 but may share the same frequency spectrum, leading to potential interference.

The BSS2 208 may represent another basic service set that overlaps in coverage with BSS1 206. The BSS2 208 may encounter interference from neighboring BSS networks such as BSS1 206 and BSS3 210. The BSS2 208 may include STAs 204 that detect OBSS interference and communicate this to the AP 202 for improved network management.

The BSS3 210 may include a third basic service set that shares the same frequency spectrum as BSS1 206 and BSS2 208. The BSS3 210 may be one of several BSS networks operating in close proximity, which may lead to overlapping coverage and interference. The BSS3 210 may impact the performance of nearby BSS networks, such as BSS1 206 and BSS2 208, due to shared frequency use.

In some implementations, the AP 202 and STAs 204 may operate together by utilizing the proprietary Action frames to exchange Disabled Subchannel Bitmap subfield information. The AP 202 may indicate its support for this mechanism through a capability bit in the Vendor Specific Element in its frames, and STAs 204 may similarly indicate their support in their frames to the AP 202. The STAs 204 may send these proprietary Action frames to the AP 202 at any time during the connection, and the AP 202 may respond with a negotiated subband puncturing pattern. The AP 202 may also send unsolicited proprietary Action frames to STAs 204, which have indicated support, to set subband puncturing on top of the puncturing indicated by the AP 202 in Beacons.

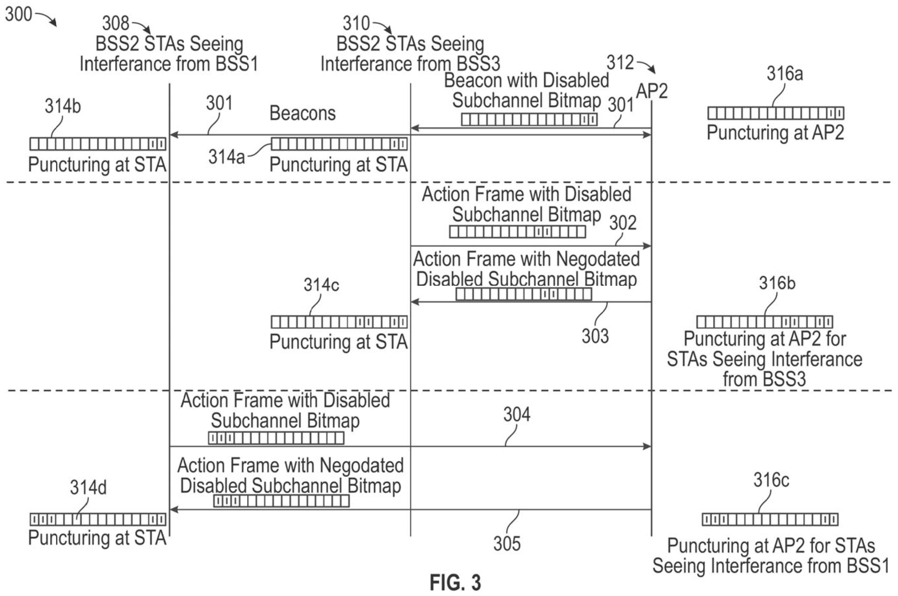

FIG. 3 shows a communication pattern diagram 300 which supports techniques for exchanging subband puncture information for network throughput management in accordance with various aspects of the present disclosure. As depicted in FIG. 3, the communication pattern diagram 300 may include a BSS2 STAs 308 seeing interference from another BSS (e.g., BSS1 206), BSS2 STAs 310 seeing interference form another BSS (e.g., BSS3 208), and an AP 312. For example, in some implementations, the AP2 312 may correspond to the AP 202 in BSS2 208 illustrated in Fig. 2. In other words, in some implementations, FIG. 3 illustrates a communication pattern for the AP 202 in the BSS2 208 which has interference from overlap with BSS 1 206 and BSS3 210.

At 301, the AP 312 transmits a beacon including to the BSS2 STAs 308 seeing interference from BSS3 210. The beacon may represent a signal transmitted by an AP to indicate its presence and to convey network-related information to associated STAs including puncturing at the AP 312. In some implementations, the AP 312 may be the same as or similar to the AP 202, as described herein.

At 302, the BSS2 STAs 310 transmit an action frame with a disable subchannel bitmap to the AP 312. The disabled subchannel bitmap may include a data structure used by an AP to communicate subbands that are not to be used for transmission due to localized OBSS interference detected by the BSS3 STAs 310. In some implementations, the BSS2 STAs 310 may be the same as or similar to the STAs in BSS3 210, as described herein.

The action frame may represent a type of management frame used for the exchange of puncturing information between an AP and an STA.

In 303, the AP 312 transmits an action frame with a negotiated disabled subchannel bitmap to the BSS2 STAs 310. The negotiated disabled subchannel bitmap may include a data structure that represents the agreed-upon subbands between an AP and an STA that will be punctured to avoid OBSS interference. The negotiated disabled subchannel bitmap may be communicated back to the STA by the AP in a proprietary action frame. The negotiated disabled subchannel bitmap may reflect a combination of the AP's and STA's puncturing preferences. In some implementations, the negotiated disabled subchannel bitmap may determine the subbands that both the AP and the STA will adhere to for subsequent transmissions. The steps 304 and 305 mirror the steps 302 and 303, respectively, but with the BSS2 STAs 308 seeing interference from BSS1 instead of the BSS2 STAs 310 seeing interference from BSS3.

The various Puncturing at STA diagrams (e.g., 314a, 314b, 314c, and 314d) in FIG. 3 are illustrated to indicate exemplary subbands that an STA has determined should be punctured based on its local OBSS interference detection. The puncturing at STA may be communicated to the AP using a proprietary Action frame. The puncturing at STA 310 may result in the STA sending an Action frame with a Disabled Subchannel Bitmap field to the AP. In some implementations, the puncturing at STA 310 may lead to a negotiation process with the AP to determine the final puncturing pattern.

The puncturing at AP2 316a diagram may be indicated in the Disabled Subchannel Bitmap field of the proprietary Action frame sent to the STA. The puncturing at AP2 diagrams 316b and 316c may represent the subbands that AP2 has decided to puncture based on the negotiated information from associated STAs and its own OBSS interference detection. The puncturing at AP2 316b and 316c, respectively, may follow the negotiated subband puncturing along with the subband puncturing indicated by puncturing at AP2 316a. In some implementations, the puncturing at AP2 may be adjusted based on the STA's localized OBSS interference information.

In some implementations, the STA devices may indicate their support for the proposed mechanism via a capability bit in the Vendor Specific Element in the Probe Request and (Re)Association Request frames to the AP. The AP devices may also indicate their support for the mechanism via a capability bit in the Vendor Specific Element in the Beacon, Probe Response, and (Re)Association Response frames. The exchange of proprietary Action frames containing the Disabled Subchannel Bitmap subfield may allow for the negotiation of subband puncturing patterns that are tailored to the localized interference experienced by individual STA devices, which may be communicated to the AP and adhered to by both the AP and STA devices during subsequent transmissions.

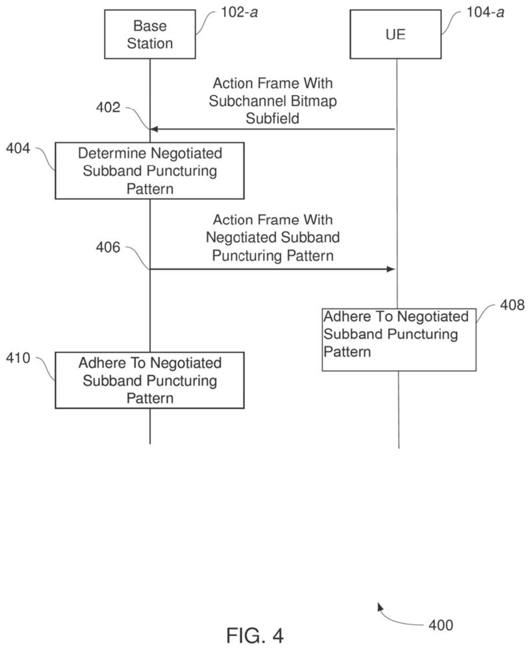

FIG. 4 illustrates an example of a process flow 400 that supports exchanging subband puncture information for network throughput management in accordance with aspects of the present disclosure. In some examples, the process flow 400 may implement aspects of the wireless communications system 100. For example, the process flow 400 may include a base station 102-*a* and a UE 104-*a*, which may be examples of corresponding devices described herein. In some implementations, the method involves base station 102-*a* receiving subband puncture information from UE 104-*a*, negotiating a puncturing pattern, and both base station 102-*a* and UE 104-*a* adhering to this pattern for improved network throughput.

At 402, the base station 102-*a* may receive an action frame from the UE 104-*a*, which includes a disabled subchannel bitmap subfield indicating subband puncturing information based on localized interference detected by the UE 104-*a*. For example, the UE 104-*a* may detect interference within a specific 20MHz subband and may communicate this information to the base station 102-*a* to adjust the subband puncturing accordingly. In some implementations, the base station 102-*a* may respond to the UE 104-*a* with a proprietary action frame that includes a negotiated disabled subchannel bitmap subfield, which may reflect a puncturing pattern that takes into account the interference reported by the UE 104-*a*. The UE 104-*a* may then apply this negotiated subband puncturing to its transmissions, which may result in a puncturing pattern that is a combination of the base station 102-*a*'s original puncturing pattern and the UE 104-*a*'s localized interference information.

At 404, the base station 102-*a* may determine a negotiated subband puncturing pattern based on the subband puncturing information obtained from the UE 104-*a* and subband puncturing information detected by the base station 102-*a*. For example, the base station 102-*a* may analyze the disabled subchannel bitmap received from the UE 104-*a* and compare it with its own detected interference levels to create a comprehensive puncturing pattern. In some implementations, the base station 102-*a* may prioritize the subband puncturing information from the UE 104-*a* if it indicates a higher level of interference than the base station 102-*a* has detected. Alternatively, the base station 102-*a* may combine the puncturing information from multiple UEs 104-*a* to determine a puncturing pattern that accommodates the collective interference experienced by the connected devices.

At 406, the base station 102-*a* may transmit an action frame containing the negotiated subband puncturing pattern back to the UE 104-*a*. For example, the action frame may include a Disabled Subchannel Bitmap field that represents the agreed-upon subbands that the UE 104-*a* and the base station 102-*a* will refrain from using to avoid OBSS interference. In some implementations, the base station 102-*a* may use a proprietary format for the action frame to ensure compatibility with the UE 104-*a*'s capabilities. The base station 102-*a* may also include a timestamp in the action frame to indicate the time at which the negotiated subband puncturing pattern becomes effective.

At 408, the UE 104-*a* may receive the action frame with the negotiated subband puncturing pattern from the base station 102-*a* and adhere to the negotiated subband puncturing pattern for subsequent frame exchanges between them. For example, the UE 104-*a* may use the received subband puncturing pattern to adjust its transmission strategy over the wireless network. In some implementations, the UE 104-*a* may store the negotiated subband puncturing pattern for future reference during the communication session with the base station 102-*a*. If the UE 104-*a* detects changes in local interference, it may request a new negotiation of the subband puncturing pattern with the base station 102-*a* to maintain efficient communication.

At 410, the base station 102-*a* and the UE 104-*a* may adhere to the negotiated subband puncturing pattern for subsequent unicast frame exchanges between them. For example, the base station 102-*a* may utilize the negotiated subband puncturing pattern to avoid transmitting on specific subbands that are prone to interference, thereby reducing the likelihood of packet collisions. In some implementations, the UE 104-*a* may apply the same puncturing pattern to its transmissions, ensuring that both the base station 102-*a* and the UE 104-*a* are synchronized in their use of the wireless spectrum. If the environment changes and new interference patterns are detected, the base station 102-*a* and the UE 104-*a* may renegotiate the subband puncturing pattern to adapt to the new conditions.

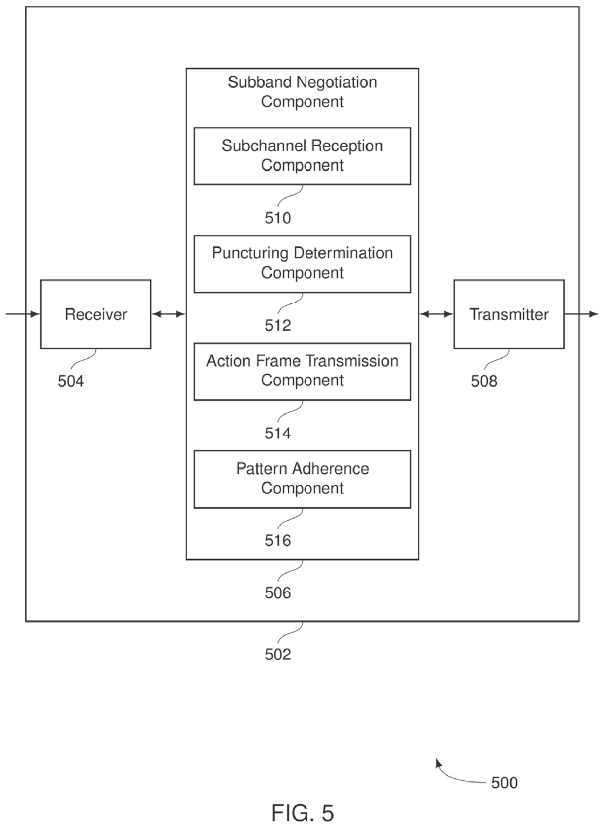

FIG. 5 shows a block diagram 500 of an apparatus 502 that supports exchanging subband puncture information for network throughput management in accordance with various aspects of the present disclosure. The apparatus 502 may include an input module 504, a subband negotiation component 506, and an output module 508. The apparatus 502 may also include a processor. Each of these components may be in communication with one another (e.g., via one or more buses). In some cases, the apparatus 502 may be an example of a user terminal, a database server, or a system containing multiple computing devices.

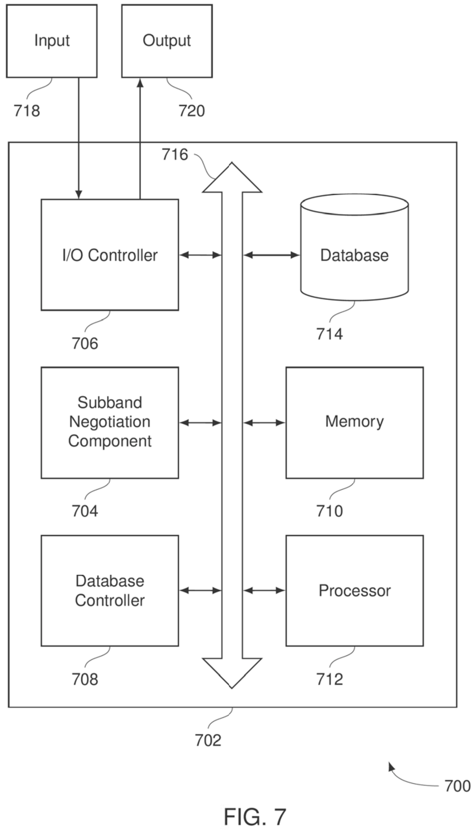

The input module 504 may manage input signals for the apparatus 502. For example, the input module 504 may identify input signals based on an interaction with a modem, a keyboard, a mouse, a touchscreen, or a similar device. These input signals may be associated with user input or processing at other components or devices. In some cases, the input module 504 may utilize an operating system such as iOS^{®}, ANDROID^{®}, MS-DOS^{®}, MS-WINDOWSO, OS/2^{®}, UNIX^{®}, LINUX^{®}, or another known operating system to handle input signals. The input module 504 may send aspects of these input signals to other components of the apparatus 502 for processing. For example, the input module 504 may transmit input signals to the subband negotiation component 506 to support face detection to address privacy in publishing image datasets. In some cases, the input module 504 may be a component of an input/output (I/O) controller 706 as described with reference to FIG. 7.

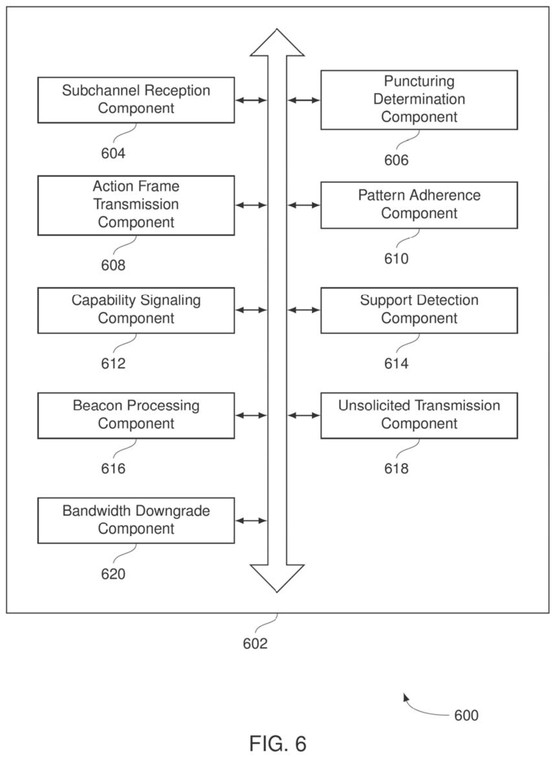

The subband negotiation component 506 may include one or more of a subchannel reception component 510, a puncturing determination component 512, an action frame transmission component 514, a pattern adherence component 516, and/or other components. The subband negotiation component 506 may be an example of aspects of the subband negotiation component 602 or 704 described with reference to FIGS. 6 and 7.

The subchannel reception component 510 may be configured as or otherwise support a means for receiving, at an access point, an action frame from a station device, the action frame including a disabled subchannel bitmap subfield indicating subband puncturing information based on localized interference detected by the station device. The puncturing determination component 512 may be configured as or otherwise support a means for determining, at the access point, a negotiated subband puncturing pattern based on the subband puncturing information received from the station device and subband puncturing information detected by the access point. The action frame transmission component 514 may be configured as or otherwise support a means for transmitting, from the access point to the station device, an action frame containing the negotiated subband puncturing pattern. The pattern adherence component 516 may be configured as or otherwise support a means for adhering to the negotiated subband puncturing pattern for subsequent unicast frame exchanges between the access point and the station device.

The output module 508 may manage output signals for the apparatus 502. For example, the output module 508 may receive signals from other components of the apparatus 502, such as the subband negotiation component 506, and may transmit these signals to other components or devices. In some specific examples, the output module 508 may transmit output signals for display in a user interface, for storage in a database or data store, for further processing at a server or server cluster, or for any other processes at any number of devices or systems. In some cases, the output module 508 may be a component of an I/O controller 706 as described with reference to FIG. 7.

FIG. 6 shows a block diagram 600 of a subband negotiation component 602 that supports exchanging subband puncture information for network throughput management in accordance with various aspects of the present disclosure. The subband negotiation component 602 may be an example of aspects of a subband negotiation component 506, a subband negotiation component 704, or both, as described herein. The subband negotiation component 602, or various components thereof, may be an example of means for performing various aspects of exchanging subband puncture information for network throughput management as described herein. For example, one or more aspects of the subband negotiation component 602 may be included in one or more of a base station 102, a UE 104, an access network entity 118, an access network transmission entity 120, and/or other components of the wireless communications system 100, as described in connection with FIG. 1. According to some implementations, the subband negotiation component 602 may include one or more of a subchannel reception component 604, a puncturing determination component 606, an action frame transmission component 608, a pattern adherence component 610, a capability signaling component 612, a support detection component 614, a beacon processing component 616, an unsolicited transmission component 618, a bandwidth downgrade component 620, and/or other components. Each of these components may communicate, directly or indirectly, with one another (e.g., via one or more buses).

The subchannel reception component 604 may be configured as or otherwise support a means for receiving, at an access point, an action frame from a station device, the action frame including a disabled subchannel bitmap subfield indicating subband puncturing information based on localized interference detected by the station device. In some implementations, the action frame may be a proprietary frame that is exchanged between the station device and the access point. The disabled subchannel bitmap subfield may contain a pattern that represents the subbands where the station device has detected interference and suggests avoiding transmission.

In some implementations, the subchannel reception component 604 may process the received action frame to determine the subband puncturing pattern to be applied by the access point. The access point may use this information to adjust its transmission strategy in a way that may account for the interference experienced by the station device. The subchannel reception component 604 may store the received puncturing information for use in coordinating communication with the station device.

The puncturing determination component 606 may be configured as or otherwise support a means for determining, at the access point, a negotiated subband puncturing pattern based on the subband puncturing information received from the station device and subband puncturing information detected by the access point. In some implementations, the puncturing determination component 606 may receive subband puncturing information that includes a disabled subchannel bitmap subfield. The disabled subchannel bitmap subfield may indicate specific subbands where the station device has detected interference. In some implementations, the puncturing determination component 606 may process the received subband puncturing information to determine a pattern that may be different for various station devices associated with the access point.

The action frame transmission component 608 may be configured as or otherwise support a means for transmitting, from the access point to the station device, an action frame containing the negotiated subband puncturing pattern. In some implementations, the action frame transmission component 608 may utilize a proprietary format for the action frame. The action frame may include a Disabled Subchannel Bitmap subfield that reflects the negotiated subband puncturing pattern. The action frame transmission component 608 may send this action frame in response to receiving a subband puncturing request from a station device.

The pattern adherence component 610 may be configured as or otherwise support a means for adhering to the negotiated subband puncturing pattern for subsequent unicast frame exchanges between the access point and the station device. In some implementations, the pattern adherence component 610 may ensure that the station device refrains from transmitting on subbands that are part of the negotiated puncturing pattern. The component 610 may also be responsible for monitoring the unicast frame exchanges to confirm adherence to the puncturing pattern. The pattern adherence component 610 may be designed to recognize the negotiated subband puncturing pattern as it is applied to the transmission of frames, ensuring that the pattern is maintained throughout the communication session.

In some examples, the capability signaling component 612 may be configured as or otherwise support a means for transmitting, from the access point to the station device, a capability bit indicating support for the subband puncturing exchange mechanism within a vendor specific element in at least one of a beacon frame, a probe response frame, or a (re)association response frame. In some implementations, the capability bit may be included within a Vendor Specific Element that has a predefined organization unique identifier (OUI). The capability bit may be set to 1 to indicate support for the subband puncturing exchange mechanism. In some implementations, the station device may scan for beacon frames that contain the Vendor Specific Element with the capability bit set to 1 to identify access points that support the subband puncturing exchange mechanism.

In some examples, the support detection component 614 may be configured as or otherwise support a means for receiving, at the access point, a probe request or a (re)association request frame from the station device, the frame including a vendor specific element with a capability bit indicating the station device's support for the subband puncturing exchange mechanism. In some implementations, the support detection component 614 may be further configured to parse the vendor specific element to determine the presence of the capability bit. The support detection component 614 may also be configured to log the support status of the station device for the subband puncturing exchange mechanism. In some implementations, the support detection component 614 may be capable of processing multiple request frames from various station devices to ascertain their support for the subband puncturing exchange mechanism.

In some examples, the beacon processing component 616 may be configured as or otherwise support a means for the station device adhering to an additional subband puncturing pattern indicated by the access point in beacon frames, in combination with the negotiated subband puncturing pattern, for subsequent unicast frame exchanges. In some implementations, the beacon processing component 616 may receive beacon frames that include a Disabled Subchannel Bitmap subfield. The station device may use the information from the beacon frames to determine which subbands to avoid during unicast transmissions. The beacon processing component 616 may ensure that the station device adheres to both the AP's and its own puncturing pattern when exchanging frames.

In some examples, the unsolicited transmission component 618 may be configured as or otherwise support a means for sending, from the access point, an unsolicited action frame to the station device, the unsolicited action frame containing a subband puncturing pattern for the station device to adhere to in addition to the negotiated subband puncturing pattern. In some implementations, the unsolicited action frame may be transmitted to the station device without a prior request from the station device for such information. The unsolicited action frame may contain a Disabled Subchannel Bitmap field that specifies the additional subband puncturing pattern. The station device may use the information from the unsolicited action frame to adjust its transmission behavior to avoid subbands with detected OBSS interference.

In some examples, the bandwidth downgrade component 620 may be configured as or otherwise support a means for downgrading a bandwidth for unicast frame exchanges of the station device in response to the negotiated subband puncturing pattern not honoring the station device's subband puncturing request. In some implementations, the station device may determine to use a lower bandwidth that does not include the subbands where OBSS interference is detected. The station device may send an Orthogonal Frequency-Division Multiple Access (OFDMA) based Operation Mode Indication (OMI) control frame to indicate the change in bandwidth usage. The station device may continue to operate using the downgraded bandwidth until it determines that the OBSS interference has ceased or until a new negotiation with the access point is successful.

FIG. 7 shows a diagram of a system 700 including a device 702 that supports exchanging subband puncture information for network throughput management in accordance with aspects of the present disclosure. The device 702 may be an example of or include the components of a database server or an apparatus 502 as described herein. The device 702 may include components for bi-directional data communications including components for transmitting and receiving communications, including a subband negotiation component 704, an I/O controller 706, a database controller 708, memory 710, a processor 712, and a database 714. These components may be in electronic communication via one or more buses (e.g., bus 716).

The subband negotiation component 704 may be an example of a subband negotiation component 506 or 602 as described herein. For example, the subband negotiation component 704 may perform any of the methods or processes described above with reference to FIGS. 5 and 6. In some cases, the subband negotiation component 704 may be implemented in hardware, software executed by a processor, firmware, or any combination thereof.

The I/O controller 706 may manage input signals 718 and output signals 720 for the device 702. The I/O controller 706 may also manage peripherals not integrated into the device 702. In some cases, the I/O controller 706 may represent a physical connection or port to an external peripheral. In some cases, the I/O controller 706 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 706 may represent or interact with a modem, a keyboard, a mouse, a touchscreen, or a similar device. In some cases, the I/O controller 706 may be implemented as part of a processor. In some cases, a user may interact with the device 702 via the I/O controller 706 or via hardware components controlled by the I/O controller 706.

The database controller 708 may manage data storage and processing in a database 714. In some cases, a user may interact with the database controller 708. In other cases, the database controller 708 may operate automatically without user interaction. The database 714 may be an example of a single database, a distributed database, multiple distributed databases, a data store, a data lake, or an emergency backup database.

Memory 710 may include random-access memory (RAM) and read-only memory (ROM). The memory 710 may store computer-readable, computer-executable software including instructions that, when executed, cause the processor to perform various functions described herein. In some cases, the memory 710 may contain, among other things, a basic input/output system (BIOS) which may control basic hardware or software operation such as the interaction with peripheral components or devices.

The processor 712 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor 712 may be configured to operate a memory array using a memory controller. In other cases, a memory controller may be integrated into the processor 712. The processor 712 may be configured to execute computer-readable instructions stored in a memory 710 to perform various functions (e.g., functions or tasks supporting exchanging subband puncture information for network throughput management).

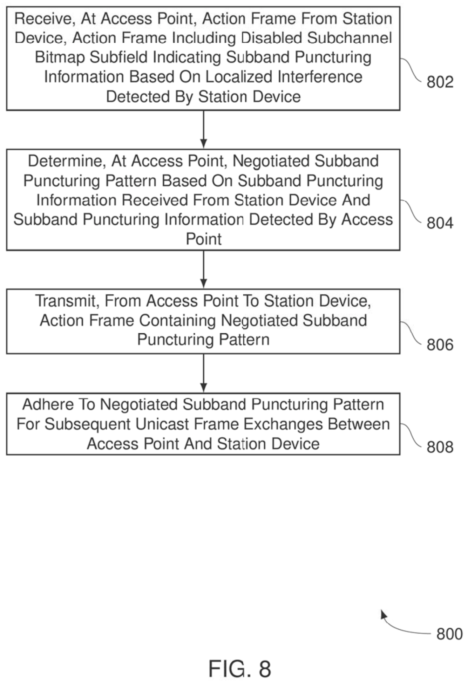

FIG. 8 shows a flowchart illustrating a method 800 that supports exchanging subband puncture information for network throughput management in accordance with various aspects of the present disclosure. The operations of the method 800 may be implemented by one or more components of a networked computing system as described herein. For example, the operations of the method 800 may be performed by a subband negotiation component as described with reference to FIGS. 5 through 7. In some examples, one or more components of a networked computing system may execute a set of instructions to control the functional elements of the component(s) to perform the described functions. Additionally or alternatively, the one or more components of a networked computing system may perform aspects of the described functions using special-purpose hardware.

At 802, the method 800 may include receiving, at an access point, an action frame from a station device, the action frame including a disabled subchannel bitmap subfield indicating subband puncturing information based on localized interference detected by the station device. The operations of 802 may be performed in accordance with examples as disclosed herein. In some examples, aspects of the operations of 802 may be performed by a subchannel reception component 604 as described with reference to FIG. 6.

At 804, the method 800 may include determining, at the access point, a negotiated subband puncturing pattern based on the subband puncturing information received from the station device and subband puncturing information detected by the access point. The operations of 804 may be performed in accordance with examples as disclosed herein. In some examples, aspects of the operations of 804 may be performed by a puncturing determination component 606 as described with reference to FIG. 6.

At 806, the method 800 may include transmitting, from the access point to the station device, an action frame containing the negotiated subband puncturing pattern. The operations of 806 may be performed in accordance with examples as disclosed herein. In some examples, aspects of the operations of 806 may be performed by an action frame transmission component 608 as described with reference to FIG. 6.

At 808, the method 800 may include adhering to the negotiated subband puncturing pattern for subsequent unicast frame exchanges between the access point and the station device. The operations of 808 may be performed in accordance with examples as disclosed herein. In some examples, aspects of the operations of 808 may be performed by a pattern adherence component 610 as described with reference to FIG. 6.

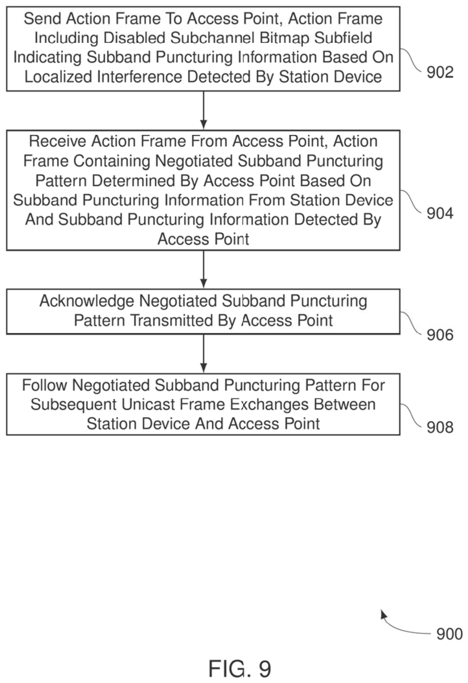

FIG. 9 shows a flowchart illustrating a method 900 that supports exchanging subband puncture information for network throughput management in accordance with various aspects of the present disclosure. The operations of the method 900 may be implemented by one or more components of a networked computing system as described herein. For example, the operations of the method 900 may be performed by a subband negotiation component as described with reference to FIGS. 5 through 7. In some examples, one or more components of a networked computing system may execute a set of instructions to control the functional elements of the component(s) to perform the described functions. Additionally or alternatively, the one or more components of a networked computing system may perform aspects of the described functions using special-purpose hardware.

At 902, the method 900 may include sending, from a station device (e.g., user equipment), an action frame to an access point (e.g., a base station), the action frame including a disabled subchannel bitmap subfield indicating subband puncturing information based on localized interference detected by the station device. The operations of 902 may be performed in accordance with examples as disclosed herein. In some examples, aspects of the operations of 902 may be performed by an action frame transmission component 608 as described with reference to FIG. 6.

At 904, the method 900 may include receiving, at the station device, an action frame from the access point, the action frame containing a negotiated subband puncturing pattern determined by the access point based on the subband puncturing information from the station device and subband puncturing information detected by the access point. The operations of 904 may be performed in accordance with examples as disclosed herein. In some examples, aspects of the operations of 904 may be performed by a subchannel reception component 604 as described with reference to FIG. 6.

At 906, the method 900 may include acknowledging, at the station device, the negotiated subband puncturing pattern transmitted by the access point. The operations of 906 may be performed in accordance with examples as disclosed herein. In some examples, aspects of the operations of 906 may be performed by a capability signaling component 612 as described with reference to FIG. 6.

At 908, the method 900 may include following the negotiated subband puncturing pattern for subsequent unicast frame exchanges between the station device and the access point. The operations of 908 may be performed in accordance with examples as disclosed herein. In some examples, aspects of the operations of 908 may be performed by a pattern adherence component 610 as described with reference to FIG. 6.

It should be noted that the methods described herein describe possible implementations, and that the operations and the steps may be rearranged or otherwise modified and that other implementations are possible. Furthermore, aspects from two or more of the methods may be combined.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A system for exchanging subband puncture information for network throughput management, comprising:
circuitry configured to
transmit, by a station device, a frame to an access point, the frame including a bitmap subfield indicating first subband puncturing information based on interference detected by the station device,
receive, at the station device, a negotiated subband puncturing pattern including the first subband puncturing information transmitted by the station device and second subband puncturing information based on interference detected by the access point, and
adhere to the negotiated subband puncturing pattern for subsequent frame exchanges between the access point and the station device.

2. The system of claim 1, wherein the circuitry is further configured to
receive, from the access point, a capability bit indicating support for the subband puncturing exchange mechanism within a vendor specific element in at least one of a beacon frame, a probe response frame, an association response frame, or a reassociation response frame.

3. The system of claim 1 or 2, wherein the processing circuitry is further configured to
transmit, to the access point, a probe request, an association request frame, or a reassociation request frame from the station device, the frame including a vendor specific element with a capability bit indicating the station device's support for the subband puncturing exchange mechanism.

4. The system of any one of the claims 1 to 3, wherein the circuitry is further configured to
adhere to an additional subband puncturing pattern indicated by the access point in beacon frames, in combination with the negotiated subband puncturing pattern, for subsequent frame exchanges.

5. The system of any one of the claims 1 to 4, wherein the circuitry is further configured to
receive, from the access point, an unsolicited frame, the unsolicited frame containing a subband puncturing pattern for the station device to adhere to in addition to the negotiated subband puncturing pattern.

6. The system of any one of the claims 1 to 5, wherein
a bandwidth for frame exchanges of the station device is downgraded in response to the negotiated subband puncturing pattern not honoring the station device's subband puncturing request.

7. The system of any one of the claims 1 to 6, wherein
the frame transmitted by the station device includes a timestamp, enabling the access point to determine a temporal relevance of the first subband puncturing information;
and/or wherein
the frame received from the access point includes a timestamp, allowing the station device to verify how recently the negotiated subband puncturing pattern was negotiated.

8. A system for exchanging subband puncture information for network throughput management, comprising:
circuitry configured to
receive at an access point a frame from a station device, the frame including a bitmap subfield indicating first subband puncturing information based on interference detected by the station device;
determine at the access point a negotiated subband puncturing pattern including the first subband puncturing information received from the station device and second subband puncturing information based on interference detected by the access point;
transmit from the access point to the station device a frame containing the negotiated subband puncturing pattern; and
adhere to the negotiated subband puncturing pattern for subsequent frame exchanges between the access point and the station device.

9. The system of claim 8, wherein the circuitry is further configured to perform at least one of the following:
transmittin from the access point to the station device a capability bit indicating support for the subband puncturing exchange mechanism within a vendor specific element in at least one of a beacon frame, a probe response frame, an association response frame, or a reassociation response frame;
receiving at the access point a probe request, an association response frame, or a reassociation request frame from the station device, the frame including a vendor specific element with a capability bit indicating the station device's support for the subband puncturing exchange mechanism;
transmitting to the station device an additional subband puncturing pattern indicated by the access point in beacon frames, in combination with the negotiated subband puncturing pattern, for subsequent frame exchanges;
transmitting from the access point an unsolicited frame to the station device, the unsolicited frame including a subband puncturing pattern for the station device to adhere to in addition to the negotiated subband puncturing pattern.

10. The system of claim 8 or 9, wherein the circuitry is further configured to
receive from the station device an indication of downgraded bandwidth for frame exchanges of the station device in response to the negotiated subband puncturing pattern not honoring the station device's subband puncturing request.

11. The system of any one of the claims 8 to 10, wherein
a timestamp is included in the frame from the station device, enabling the access point to determine a temporal relevance of the first subband puncturing information.

12. The system of any one of the claims 8 to 11, wherein
the negotiated subband puncturing pattern is stored in a memory of the access point for subsequent communication sessions with the station device.

13. The system of any one of the claims 8 to 12, wherein
the frame from the station device is encrypted.

14. The system of any one of the claims 8 to 13, wherein the circuitry is further configured to
prioritize the frame from the station device over other data traffic, expediting the negotiation of the subband puncturing pattern;
and/or
update the negotiated subband puncturing pattern in response to changes in the interference detected by the station device.

15. A non-transitory computer-readable medium storing a set of instructions, the set of instructions comprising one or more instructions that, when executed by one or more processors of an access point, cause the access point to:
receive at an access point a frame from a station device, the frame including a bitmap subfield indicating first subband puncturing information based on interference detected by the station device,
determine at the access point a negotiated subband puncturing pattern including the first subband puncturing information received from the station device and second subband puncturing information based on interference detected by the access point,
transmit from the access point to the station device a frame containing the negotiated subband puncturing pattern, and
adhere to the negotiated subband puncturing pattern for subsequent frame exchanges between the access point and the station device.
